# EUROPÄISCHE PATENTSCHRIFT

(11) **EP 0 650 943 B1**
(45) Veröffentlichungstag und Bekanntmachung des Hinweises auf die Patenterteilung: **05.03.1997**
(21) Anmeldenummer: 94116067.3
(22) Anmeldetag: 12.10.1994
(51) Int. Cl.: C04B 35/591

(54) **Verfahren zur Herstellung von dichten Siliciumnitrid-Werkstoffen**
Process for producing dense silicon nitride materials
Procédé de fabrication de matériaux en carbure de silicium dense

(30) Priorität: 25.10.1993 DE 4336311
(43) Veröffentlichungstag der Anmeldung: 03.05.1995
(73) Patentinhaber: BAYER AG, 51368 Leverkusen (DE)
(72) Erfinder: Schönfelder, Lothar, Dr., D-96450 Coburg (DE); Leimer, Gerhard, Dr., D-96472 Rödental (DE); Roth, Stefan, Dipl.-Ing., D-96274 Itzgrund-Gieussen (DE)

(56) Entgegenhaltungen:
- EP-A- 0 377 408
- EP-A- 0 388 541
- EP-A- 0 610 848
- WO-A-82/04245
- GB-A- 2 045 807
- US-A- 4 716 133
- CHEMICAL ABSTRACTS, vol. 110, no. 8, 17.April 1989 Columbus, Ohio, US; abstract no. 140366p, Seite 325; & JP-A-63 252 966

## Beschreibung

Die vorliegende Erfindung betrifft ein Verfahren zur Herstellung von dichten Siliciumnitrid-Werkstoffen durch Nitridierung von Formkörpern aus Silicium, Siliciumnitrid und Sinteradditiven unter Stickstoffnormaldruck und Sintern der Formkörper bei Stickstoffnormaldruck.

Siliciumnitridkeramiken sind auf Grund ihrer hervorragenden Eigenschaften im Hochtemperaturbereich interessant für vielfältige Anwendungen. Voraussetzung für diese Anwendungen sind jedoch kostengünstige Verfahren zur Herstellung entsprechender Siliciumnitridbauteile.

Das bekannteste Verfahren zur Herstellung von Siliciumnitridkeramiken besteht darin, daß Mischungen aus feinteiligen Siliciumnitridpulvern mit geeigneten Sinterhilfsmitteln durch Formgebungsverfahren wie Pressen, Schlickergießen oder Spritzgießen zu Formkörpern verarbeitet werden und anschließend bei hohen Temperaturen von 1800 bis 1950°C dicht gesintert werden. Der Sinterprozeß bei diesen hohen Temperaturen erfolgt dabei unter Stickstoffgasdruck, um eine Zersetzung des Siliciumnitrids zu vermeiden. Wird dieses Sintern dagegen bei Normaldruck durchgeführt, so müssen die Sinterkörper außerdem zusätzlich in geeignete Schutzpulververschüttungen eingebettet werden, um die Zersetzung des Siliciumnitrids zu vermeiden. Diese Schutzpulverschüttungen bestehen aus Siliciumnitridpulver, Sinterhilfsmitteln und inerten Materialien wie z.B. Bornitrid, um ein Versintern der Pulverschüttung zu vermeiden. Das obige Verfahren besitzt jedoch auf Grund der hohen Rohstoffkosten für feinteilige Siliciumnitridpulver und der Verwendung teurer Hochdruckgassinteranlagen erhebliche Nachteile für eine kostengünstige Fertigung von Siliciumnitridwerkstoffen. Die Verwendung von Schutzpulververschüttungen stellt zusätzlich einen weiteren Kostenfaktor dar. Diese Pulver können auf Grund von Alterungseffekten (Verdampfungsprozesse, Sinterprozesse, Oxidation) nicht unbegrenzt wiederverwendet werden. Außerdem wird durch die Schutzpulverschüttung eine homogene Temperaturverteilung in großen Sinteranlagen erheblich erschwert. Durch diese inhomogene Temperaturverteilung kommt es zu Dichtegradienten in den keramischen Bauteilen, bzw. zu Dichteunterschieden innerhalb einer Ofencharge. Außerdem ist die Verwendung der feinteiligen Schutzpulverschüttung für das Be- und Entladen der Sinteröfen sehr aufwendig. Desweiteren führt die Verwendung der voluminösen Schutzpulver mit niedrigen Schüttdichten zu einer unwirtschaftlichen Raum-Zeit-Ausbeute für den Sinterprozeß.

Eine weitere Möglichkeit des Sinterns ist wie erwähnt die Anwendung hoher Gasdrucke (Gasdrucksintern) oder das heißisostatische Pressen (HIP). Dabei wird durch die Verwendung des erhöhten Stickstoffdruckes die Zersetzung des Siliciumnitrids unterdrückt und es kann bei höheren Sintertemperaturen gesintert werden. Der erhöhte Stickstoffdruck verhindert jedoch nicht die Verdampfung der Sinteradditive aus den Proben. Diese Verdampfung wird durch die erhöhten Sintertemperaturen außerdem noch verstärkt. Dies führt zu der Gefahr einer inhomogenen Probenzusammensetzung durch Konzentrationsgradienten der Sinteradditive in den Proben. Dies wiederum hat Eigenschaftsschwankungen in der gesinterten Keramik zur Folge. Nach dem Stand der Technik wird versucht, durch die Verwendung von Schutzpulverschüttungen, die neben Siliciumnitrid auch die jeweiligen Sinteradditive enthalten, diese Zersetzungsprozesse zurückzudrängen. Wie bereits erwähnt, stellt das jedoch einen zusätzlichen Kostenfaktor dar und führt außerdem zu Problemen bei größeren Ofenbeladungen.

Im Vergleich zu der Verwendung von Siliciumnitridpulvern als Rohstoff ist dagegen die Verwendung von Siliciumpulvern weitaus kostengünstiger. Dieses Verfahren, das sogenannte Reaktionsbinden von Silicium, besitzt jedoch den Nachteil, daß vor dem Sinterprozeß zunächst das Silicium durch Reaktion mit Stickstoff in Siliciumnitrid überführt werden muß, bevor der dann noch poröse Körper durch Sintern verdichtet werden kann. Diese exotherme Nitridierungsreaktion erfordert jedoch sehr lange Reaktionszeiten, um einen Temperaturanstieg über den Siliciumschmelzpunkt hinaus und damit ein Ausschmelzen von Silicium zu vermeiden. Dadurch ergeben sich vor allem bei dickwandigen Teilen auch wegen der langsamen Diffusion des Stickstoffes ins Teileinnere sehr lange Reaktionszeiten. Dickwandige Teile bzw. hohe Dichten der Siliciumrohkörper können außerdem zu unvollständigen Nitridierungsprozessen führen.

Es werden Verfahren beschrieben, die diese nachteiligen langen Nitridierungszeiten verkürzen sollen. So wird in der DE-A 2 910 943 die Nitridierung von Silicium durch Zumischen von Siliciumnitridpulver offenbart. Das zugemischte Siliciumnitridpulver nimmt die Reaktionswärme auf, wodurch die Nitridierung beschleunigt durchgeführt werden kann. Die Sinterung wird dabei jedoch durch ein teures Hochdruckverfahren (Kapselhippen) wieder kostenungünstig. Auch das Verfahren gemäß der EP-A 377408 beschreibt die Nitridierung von Silicium-Siliciumnitridmischungen, jedoch unter Verwendung hoher Drucke von 0,5 bis 4,9 MPa, wodurch spezielle -Druckapparaturen notwendig sind. Durch dieses Hochdruckverfahren soll auch die schnelle Nitridierung dicker Formkörper ermöglicht werden.

Nach der EP-A 79908 wird das Sintern nitridierter Körper dadurch erleichtert, daß Siliciumpulver in Gegenwart von Siliciumnitrid aufgemahlen wird. Durch ein Naßmahlungsverfahren wird das Silicium bis auf eine mittlere Korngröße unter 1 µm vermahlen. Durch die Verwendung dieser extrem feinteiligen Siliciumpulver soll die Nitridierung beschleunigt und der Sinterprozeß erleichtert werden. Dieses Verfahren bietet jedoch ebenfalls Nachteile für ein kostengünstiges Produktionsverfahren. Zum einen müssen beim Sintern Schutzpulververschüttungen verwendet werden; des weiteren muß Silicium durch eine Naßmahlung sehr fein aufgemahlen werden. Auf Grund der Hydrolyseempfindlichkeit von Silicium muß diese Mahlung in wasserfreien organischen Lösungsmitteln geschehen. Zudem müssen diese Mahlungen in Mahlgefäßen aus Siliciumnitrid mit Siliciumnitridmahlkugeln durchgeführt werden, um eine Kontamination durch Verunreinigungen infolge Mahlbetrieb auszuschließen. Um die Nitridierung zu beschleunigen, werden außerdem eisenhaltige Siliciumpulver eingesetzt. Diese Eisenverunreinigungen führen aber bekannterweise zu Inhomogenitäten im Siliciumnitridwerkstoff und damit zu einer Beeinträchtigung der mechanischen Festigkeiten und Erniedrigung des Weibullmoduls.

Untersuchungen Zur Bruchursache in gesinterten Siliciumnitridproben Zeigen, daß in diesen Proben Eisen in größeren Anreicherungen gefunden wird und daß diese Werkstoffinhomogenitäten bruchauslösend wirken und die Werkstoffeigenschaften negativ beeinflussen.

Aus EP-A 0 610 848, die eine ältere Anmeldung für die Vertragsstaaten BE, DE, FR, GB, IT und SE darstellt, sind Si₃N₄-Werkstoffs mit Sinterdichten von 99 bis 99,2 % d. th. D., Raumbiegefestigkeiten von 943 bis 1308 MPa und Weibullmoduli von 20 bis 26 bekannt.

Aus JP-A 63 252 966 ist ein Verfahren Zur Herstellung von Si₃N₄-Keramik bekannt, wobei 1 bis 70 Gew.-% β-Si₃N₄ mit 99 bis 30 Gew.-% metallischen Siliciums mit einer mittleren Teilchengröße < 2 µm Zu einem Formteil gepreßt, und in Stickstoff-Atmosphäre bei Temperaturen von 1300°C bis 1500°C nitridiert werden.

Es bestand deshalb die Aufgabe, ein Verfahren bereitzustellen, bei dem möglichst eisenarme Silicium-Rohstoffpulver tur den Nitridierungsprozeß eingesetzt werden können, man aber trotzdem einen wirtschaftlich schnellen Nitridierungsprozeß durchführen kann, bei gleichzeitiger Verbesserung der Werkstoffeigenschaften.

Überraschenderweise wurde gefunden, daß durch die Verwendung von Siliciumpulver mittlerer Korngrößen von 1 bis 20 µm ein schneller Nitridierungsprozeß unter Stickstoffnormaldruck von 1 bar durchführbar ist und außerdem eine Sinterung unter Stickstoffnormaldruck und ohne Verwendung von Schutzpulverschüttungen ermöglicht wird.

Gegenstand dieser Erfindung ist somit ein Verfahren Zur Herstellung von dichten Siliciumnitrid-Werkstoffen durch Nitridierung von Formkörpern aus Mischungen von Silicium, Siliciumnitrid und Sinteradditiven unter Stickstoffnormaldruck und Sintern der Formkörper bei Stickstoffnormaldruck ohne Schutzpulverschüttung, wobei ein Siliciumpulver mit einer mittleren Korngröße von 1 bis 20 µm und einem Eisengehalt von < 0,7 Gew.-% eingesetzt wird.

Dieses Verfahren bietet die Voraussetzungen für einen kostengünstigen Herstellungsprozeß. Sowohl für den Nitridier- als auch lur den Sinterprozeß sind keine speziellen Hochdruckanlagen notwendig. Für das erfindungsgemäße Verfahren einsetzbare Siliciumpulver können durch trockene Mahlverfahren ohne die Verwendung von Lösungsmitteln hergestellt werden. Dies geschieht z.B. durch das sogenannte Gegenstrahlmahlverfahren. Die Verwendung des erfindungsgemäßen Siliciumpulvers mittlerer Korngrößen von 1 bis 20 µm bietet vor allem Vorteile für die Formgebungsverfahren Schlickergießen und Spritzgießen. Feinteiligere Siliciumpulver sind nachteilig für das Spritzgußverfahren. Auf Grund der hohen Feinteiligkeit wird ein erhöhter Bindemittelbedarf notwendig. Dadurch wird die Gründichte der spritzgegossenen Körper und vor allem der Ausheizvorgang für das organische Bindemittel auf Grund des hohen Bindemittelanteils erschwert. Ein Zu hoher organischer Bindemittelanteil führt beim Ausheizprozeß Zur Bildung von Fehlern wie Blasen und Kissen. Feinteiliges Siliciumpulver führt beim Schlickergießen vor allem Zu einer erhöhten Reaktivität gegenüber Wasser. Durch die Hydrolysereaktion zwischen Silicium und Wasser kommt es Zu einer Wasserstoffgasbildung und damit Zu einer erhöhten Porenbildung in den schlickergegossenen Formkörpern. Siliciumpulver hoher Feinteiligkeit besitzt Zwar gute Nitridiereigenschaften, jedoch wird beim Schlickergießen die Scherbenbildungsrate drastisch erniedrigt infolge eines höheren Filtrationswiderstandes. Gleichzeitig wird die Gründichte der Formkörper nachteilig gesenkt.

Besonders vorteilhaft wirkt sich das erfindungsgemäße Verfahren hinsichtlich eines schnellen Nitridierungsprozesses aus, auch kann die Nitridierung bei relativ niedriger Temperatur durchgeführt werden. Nach einer bevorzugten Ausführungsform des erfindungsgemäßen Verfahrens wird die Nitridierung bei Temperaturen von 1000 bis 1450°C unter Stickstoffnormaldruck durchgeführt bei einer Reaktionsdauer von unter 30 Stunden.

Nach dem erfindungsgemäßen Verfahren können auch Siliciumkörper mit Wandstarken von mehr als 5 mm, bevorzugt mehr als 10 mm, in extrem kurzen Nitridierungszeiten unter Stickstoffnormaldruck vollständig nitridiert werden. Diese schnelle Nitridierung gelingt mit den erfindungsgemäßen eisenarmen Siliciumpulvern mit Eisengehalten unter 0,7 Gew.%. Bei Verwendung der erfindungsgemäßen Mischung aus Siliciumnitridpulver mit Siliciumpulver mit mittleren Korngrößen von 1 bis 20 µm wird in den Formkörpern eine geeignete Porenstruktur gebildet, die auch bei schnellen Nitridierungsprozessen und großen Wandstarken eine Diffusion des Stickstoffreaktionsgases in die inneren Formteilbereiche ermöglicht.

Überraschenderweise besitzt die durch den Nitridierungsprozeß ausgebildete Siliciumnitridmatrix eine ausreichende Feinteiligkeit und damit eine hohe Sinteraktivität. Diese hohe Sinteraktivität des nitridierten Formkörpers erlaubt ein Dichtsintern der Teile vorteilhaft bereits bei Temperaturen unterhalb 1800°C. Erhöhte Stickstoffdrucke sind für diesen Sinterprozeß deshalb nicht notwendig. Auf Grund der relativ niedrigen Sintertemperaturen wird eine Zersetzung des Siliciumnitrids bzw. der Verdampfungsprozeß der eingesetzten Sinteradditive drastisch reduziert, so daß Werkstoffinhomogenitäten vermieden werden.

Das beschriebene Verfahren ermöglichst ein Dichtsintern der nitridierten Teile, vorteilhaft bereits bei 1 bar Stickstoffnormaldruck. Weiterhin wirkt sich dabei vorteilhaft aus, daß bei diesem Sinterprozeß keine Schutzpulververschüttung notwendig ist.

In einer bevorzugten Ausführungsform des erfindungsgemäßen Verfahrens wird die Normaldrucksinterung bei Temperaturen von 1630 bis 1830°C durchgeführt.

Da das erfindungsgemäße Verfahren ohne die Verwendung der aufwendigen kostenintensiven Schutzpulverschüttungen durchgeführt werden kann, wird außerdem ermöglicht, daß die Prozesse Nitridieren und Sintern in einem Schritt d.h. einem Ofen durchgeführt werden können ohne einen zwischengeschalteten Abkühlprozeß. Da die Proben ohne Schutzpulverschüttung in den Hochtemperaturofen gesetzt werden, kann zunächst die Nitridierung und dann anschließend durch Temperaturerhöhung der Sinterprozeß erfolgen. Die Verwendung von Schutzpulververschüttungen, wie es nach dem bisherigen Stand der Technik notwendig ist, um beim Sintern eine Zersetzung des Siliciumnitrids zu verhindern, gestattet es nicht bzw. erschwert sehr den vorgeschalteten Nitridierungsprozeß. Durch das Einbetten in die dichten Schutzpulverschüttungen wird der Zugang des Reaktionsgases Stickstoff beim Nitridieren behindert, bzw. die Abführung der Reaktionswärme erschwert. Dies führt wiederum zu einer drastischen Erhöhung der Nitridierungszeiten, vor allem bei dickwandigen Teilen oder hochbeladenen Produktionsöfen.

Durch den erfindungsgemäßen Prozeß der Nitridierung und Sinterung ohne die Verwendung von Schutzpulverschüttungen wird eine bessere Raumzeit-Ausbeute für die Fertigung von Siliciumnitridteilen erreicht.

Für das erfindungsgemäße Verfahren zur Herstellung dichter Siliciumnitrid-Teile können als Sinterhilfsmittel die üblicherweise eingesetzten Oxide oder Nitride ver wendet werden. Als besonders vorteilhaft haben sich Mischungen aus Y₂O₃-Al₂O₃ bzw. Mischsysteme aus Y₂O₃-Al₂O₃-MgO erwiesen.

Besonders gute Ergebnisse werden erzielt, wenn die eingesetzte Mischung aus 2 bis 60 Gew.% Siliciumnitrid, 40 bis 95 Gew.% Silicium und bis zu 20 Gew.% Sinteradditiven besteht. Vorteilhaft können hierbei als Sinteradditive Seltenerdenoxide eingesetzt werden, wobei diese teilweise durch Oxide des Aluminiums und/oder Magnesiums substituiert sein können.

Nach dem erfindungsgemäßen Verfahren erhaltene Sinter-Werkstoffe weisen bevorzugt Sinterdichten von mehr als 95 % der theoretischen Dichte, Raumtemperaturbiegefestigkeiten über 650 MPa und einen Weibullmodul über 10 auf.

Die Erfindung wird im folgenden beispielhaft erläutert, ohne daß hier eine Einschränkung zu sehen ist.

### Beispiel 1:

Eine Mischung aus
59 Gew.% Silicium mit einer spezifischen Oberfläche, bestimmt nach der Stickstoff-1-Punkt-Methode, (DIN 66131), von 3,1 m²/g und einem Eisengehalt 0,25 Gew.%.
11,2 Gew.% Yttriumoxid
Spezifische Oberfläche = 13,6 m²/g
2,8 Gew.% Aluminiumoxid
Spezifische Oberfläche = 7,8 m²/g
27 Gew.% Siliciumnitrid
Spezifische Oberfläche = 13,5 m²/g
wurde durch Dispergierung in Isopropanol mit Aluminiumoxidkugeln auf einer Rollenbank 48 Stunden homogenisiert. Die spezifische Oberfläche der homogenisierten Mischung betrug BET = 7,2 m²/g. Im Vergleich zu den spezifischen Oberflächen der eingesetzten Rohstoffe wird deutlich, daß bei dieser Dispergierung lediglich eine Homogenisierung erzielt wird. Unter Berücksichtigung der spezifischen Oberflächen der verwendeten Rohstoffe errechnet sich für die Mischung eine spezifische Oberfläche von 7,1 m²/g. Es fand also keine Mahlung des Siliciumpulvers statt.

Die Pulvermischung wurde mit 17 Gewichtsteilen einer thermoplastischen Spritzgußplastifizierung in einem beheizbaren Kneter gemischt. Dann wurde die Spritzgußdispersion zur weiteren Homogenisierung mit einem Zweischneckenextruder extrudiert. Diese extrudierte Mischung wurde nach dem Zerkleinern zu becherförmigen Bauteilen mit einer Spritzgußmaschine verarbeitet. Die spritzgegossenen Teile besitzen die Abmessungen: maximale Wandstärke im Mantel = 3,6 mm, maximale Wandstärke im Boden = 5,6 mm, Außendurchmesser = 41,4 mm. Nach dem Spritzgießen wurde die organische Spritzgußplastifizierung an Luft bei Temperaturen bis 450°C ausgeheizt. Die ausgeheizten Teile wurden unter Stickstoffnormaldruck mit folgendem Temperaturverlauf nitridiert:
3,5 Stunden bis 800°C im Vakuum, 1 bar Stickstoff: 1,5 Stunden bis 1170°C, 4 Stunden bis 1370°C, 1 Stunde Haltezeit, 2 Stunden bis 1450°C, 10 Stunden Haltezeit.

Die Gewichtszunahme nach diesem Nitridierungsprozeß betrug über 95 % der Theorie, damit wurde eine ausreichend vollständige Nitridierung erreicht. Die nitridierten Teile wurden mit folgenden Bedingungen unter Stickstoffnormaldruckatmosphäre gesintert:
Vakuum: 70 Minuten bis 1200°C, 30 Minuten Haltezeit
1 bar Stickstoff: 55 Minuten bis 1750°C, 90 Minuten Haltezeit
Abkühlen 90 Minuten bis 600°C.

Dabei wurden die Teile ohne Pulvereinbettung in Kohlenstofftiegel gestellt. Die Dichte der gesinterten Teile betrug 3,29 g/cm³, entsprechend 99,6 % der theoretischen Dichte. Aus den Böden wurden Prüfkörper für Biegefestigkeitsmessungen gesägt. Es wurden daran bestimmt:
- Raumtemperaturbiegefestigkeit: 760 ± 54 MPa (4Punkt, 20/10 Auflager)
- Weibullmodul:: 15,7
- Kl_{c}:: 7,6 MPa x m 1/2 (Vickershärteeindruck)
- Vickershärte:: 15,9 GPa (Last 200 N)

Die Gewichtsänderung durch den Sinterprozeß betrug - 0,6 %. das heißt, die erfindungsgemäße Ausführung führt beim Normaldrucksintern trotz Sinterung ohne Schutzpulverschüttung zu keinen nennenswerten Abdampfverlusten von Si₃N₄.

Diese Werkstoffkennwerte, vor allem die kleine Streubreite der Festigkeit bei hohem Weibullmodul verdeutlichen die homogene Werkstoffqualität nach dem erfindungsgemäßen Verfahren.

### Beispiel 2:

Eine Rohstoffmischung der Zusammensetzung wie im Beispiel 1 wurde durch kaltisostatisches Pressen (Preßdruck = 1500 kp cm 1/2) zu zylindrischen Hohlkörpern folgender Abmessungen gepreßt:
Höhe: 3,9 cm, Innendurchmesser: 2,4 cm, Außendurchmesser: 6,6 cm

Die gepreßten Ringe mit einer Wandstärke von 2,1 cm wurden mit folgendem Nitridierungsprogramm unter Normalstickstoffdruck nitridiert:
Vakuum: 3,5 h bis 800°C; Stickstoff 1 bar: 1,5 Stunden bis 1170°C
8 Stunden bis 1370°C, 5 Stunden Haltezeit.

Die nitridierten Proben wurden vergleichbar dem Beispiel 1 unter Stickstoffnormaldruckatmosphäre ohne Schutzpulverschüttung in Kohlenstofftiegeln gesintert. Dabei wurde folgendes Sinterprogramm verwendet:
70 Minuten bis 1200°C, 30 Minuten Haltezeit unter Vakuum, 1 bar Stickstoff:
55 Minuten bis 1750°C, 8 Stunden Haltezeit; Abkühlen 90 Minuten bis 600°C.

Aus den gesinterten Ringen wurden 20 Probekörper präpariert, an denen folgende Eigenschaften bestimmt wurden:
- Sinterdichte:: 3,27 g/cm³, entsprechend 99,0 % der theoretischen Dichte
- Raumtemperaturbiegefestigkeit:: 950 ± 89 MPa (4 Punkt, 20/10 Auflager)
- Weibullmodul:: 14,3
- Kl_{c}:: 9,0 MPa x m^{1/2} (Vickershärteeindruck)
- Vickershärte:: 16,0 GPa (Last 200 N)

### Beispiel 3:

Wie im Beispiel 1 wurden spritzgegossene Teile hergestellt. Jedoch wurden die ausgeheizten Teile ohne Umsetzen in einem Ofen sowohl nitridiert als auch bei Stickstoffnormaldruck gesintert. Dabei wurden die Teile ohne Schutzpulvereinbettung in Kohlenstofftiegel gestellt. Der kombinierte Nitridier- und Sinterprozeß wurde mit folgendem Temperaturprogramm durchgeführt:
Vakuum: 3,5 Stunden bis 800°C, N2: 1,5 Stunde bis 1170°C, 4 Stunden bis 1370°C, 1 Stunde Haltezeit, 2 Stunden bis 1450°C, 10 Stunden Haltezeit, 0,5 Stunden bis 1730°C 1,5 Stunden Haltezeit, Abkühlen: 90 Minuten bis 600°C.

Die Dichte der gesinterten Teile betrug 3,28 g/cm³. An Prüfkörpern aus den Böden wurde bestimmt:
- Raumtemperaturbiegefestigkeit:: 824 ± 86 MPa (4-Punkt, 20/10-Auflager)
- Weibullmodul:: 13,6

### Beispiel 4

Wie im Beispiel 1 wurden becherförmige Siliciumnitridteile durch Spritzgießen hergestellt, nitridiert und gesintert. Jedoch wurde ein gröberes Siliciumpulver mit außerdem reduziertem Eisengehalt verwendet:
Spezifische Oberfläche = 1,9 m²/g, Stickstoff-1-Punkt-Methode (DIN 66131)
Mittlere Korngröße = 6,1 µm
Eisengehalt = 0,18 Gew.-%

Die Rohstoffmischung wurde wie im Beispiel 1 homogenisiert. Die spezifische Oberfläche der homogenisierten Mischungen betrug BET = 6,2 m²/g. Vergleichsweise dazu berechnet sich die spezifische Oberfläche bei Berücksichtigung der verwendeten Rohstoffe zu 6,4 m²/g. Der Vergleich mit der gemessenen spezifischen Oberfläche nach der Homogenisierungsoperation zeigt, daß bei diesem Vorgang keine Mahlung des groben Siliciumpulvers stattfindet.

Die Dichte der gesinterten Siliciumnitrid-Becher betrug 3,27 g/cm³ entsprechend 99,1 % der theoretischen Dichte. An Prüfkörpern aus den Teilen wurde bestimmt:
- Raumtemperaturbiegefestigkeit: 982 ± 51 MPa (4-Punkt, 20/10-Auflager)
- Weibull-Modul =: 18,9

## Patentansprüche

1. Verfahren zur Herstellung von dichten Siliciumnitrid-Werkstoffen durch Nitridierung von Formkörpern aus Mischungen von Silicium, Siliciumnitrid und Sinteradditiven unter Stickstoffnormaldruck und Sintern der Formkörper bei Stickstoffnormaldruck ohne Schutzpulverschüttung, dadurch gekennzeichnet, daß das Silicium als Siliciumpulver mit einer mittleren Korngröße von 1 bis 20 µm und mit einem Eisengehalt von maximal 0,7 Gew.% eingesetzt wird.

2. Verfahren gemäß Anspruch 1, dadurch gekennzeichnet, daß die Nitridierung bei Temperaturen von 1000 bis 1450°C unter Stickstoffnormaldruck und einer Reaktionsdauer von unter 30 Stunden durchgeführt wird.

3. Verfahren gemäß einem der Ansprüche 1 oder 2, dadurch gekennzeichnet, daß die Normaldrucksinterung bei Temperaturen von 1630 bis 1830°C durchgeführt wird.

4. Verfahren gemaß einem oder mehreren der Ansprüche 1 bis 3, dadurch gekennzeichnet, daß als Formkörper solche durch Pressen, Schlickergießen oder Spritzgießen mit Wandstärken von mehr als 5 mm eingesetzt werden.

5. Verfahren gemäß einem oder mehreren der Ansprüche 1 bis 4, dadurch gekennzeichnet, daß die Nitridierung und Sinterung unter Stickstoffnormaldruck ohne die Verwendung von Schutzpulverschüttungen in einem Ofenzyklus durchgeführt wird.

6. Verfahren gemäß einem oder mehreren der Ansprüche 1 bis 5, dadurch gekennzeichnet, daß eine Mischung aus 2 bis 60 Gew.% Siliciumnitrid, 40 bis 95 Gew.% Silicium und bis zu 20 Gew.% Sinteradditiven eingesetzt wird.

7. Verfahren gemäß einem oder mehreren der Ansprüche 1 bis 6, dadurch gekennzeichnet, daß als Sinteradditive Seltenerdeoxide eingesetzt werden, wobei diese teilweise durch Oxide des Aluminiums und/oder Magnesiums substituiert sein können.

## Claims

1. A process for the production of dense silicon nitride materials by nitriding of moulded bodies composed of mixtures of silicon, silicon nitride and sintering additives under normal nitrogen pressure and sintering of the moulded bodies at normal nitrogen pressure without a protective bed of powder, characterised in that the silicon is used in the form of silicon powder having an average particle size of from 1 to 20 µm and an iron content of not more than 0.7 wt.%.

2. The process according to claim 1, characterised in that the nitriding is carried out at temperatures of from 1000 to 1450°C under normal nitrogen pressure and for a reaction time of less than 30 hours.

3. The process according to either of claims 1 or 2, characterised in that the sintering under normal pressure is carried out at temperatures of from 1630 to 1830°C.

4. The process according to one or more of claims 1 to 3, characterised in that the moulded bodies used are those obtained by pressing, slip casting or injection moulding and having wall thicknesses of more than 5 mm.

5. The process according to one or more of claims 1 to 4, characterised in that the nitriding and sintering are carried out in one furnace cycle under normal nitrogen pressure without the use of protective beds of powder.

6. The process according to one or more of claims 1 to 5, characterised in that a mixture comprising from 2 to 60 wt.% of silicon nitride, from 40 to 95 wt.% of silicon and up to 20 wt.% of sintering additives is used.

7. The process according to one or more of claims 1 to 6, characterised in that the sintering additives used are rare earth oxides, these being partly substitutable by oxides of aluminium and/or of magnesium.

## Revendications

1. Procédé de préparation de matériaux de nitrure de silicium dense par nitruration de corps moulés de mélanges de silicium, nitrure de silicium et additifs de frittage sous pression atmosphérique d'azote et frittage des corps moulés sous pression atmosphérique d'azote sans amas de poudre protectrice, caractérisé en ce qu'on utilise le silicium sous forme de poudre de silicium avec une granulométrie moyenne de 1 à 20 µm et avec une teneur en fer au maximum de 0,7 % en poids.

2. Procédé selon la revendication 1, caractérisé en ce qu'on réalise la nitruration à des températures de 1000 à 1450°C sous pression atmosphérique d'azote et avec une durée de réaction inférieure à 30 h.

3. Procédé selon l'une des revendications 1 ou 2, caractérisé en ce qu'on réalise le frittage sous pression atmosphérique à des températures de 1630 à 1830°C.

4. Procédé selon l'une ou plusieurs des revendications 1 à 3, caractérisé en ce qu'on prépare les corps moulés par pressage, coulée de barbotine ou moulage par injection avec des épaisseurs de parois supérieures à 5 mm.

5. Procédé selon l'une ou plusieurs des revendications 1 à 4, caractérisé en ce qu'on réalise la nitruration et le frittage sous pression atmosphérique d'azote sans utiliser d'amas de poudre protectrice dans un cycle de four.

6. Procédé selon l'une ou plusieurs des revendications 1 à 5, caractérisé en ce qu'on utilise un mélange de 2 à 60 % en poids de nitrure de silicium, 40 à 95 % en poids de silicium et jusqu'à 20 % d'additifs de frittage.

7. Procédé selon l'une ou plusieurs des revendications 1 à 6, caractérisé en ce qu'on utilise comme additifs de frittage des oxydes de terres rares où on peut remplacer partiellement ceux-ci par des oxydes d'aluminium ou de magnésium.
